Europäisches Patentamt

European Patent Office

Office européen des brevets

(11) Publication number: **0 040 589**
**B1**

# EUROPEAN PATENT SPECIFICATION

(45) Date of publication of patent specification: **13.03.85**

(21) Application number: **81850075.3**

(22) Date of filing: **23.04.81**

(51) Int. Cl.⁴: **G 01 T 1/29, H 01 J 47/02**

(54) A method and a device relating to a transmission ion chamber.

(30) Priority: **23.04.80 SE 8003089**

(43) Date of publication of application:
**25.11.81 Bulletin 81/47**

(45) Publication of the grant of the patent:
**13.03.85 Bulletin 85/11**

(84) Designated Contracting States:
**CH DE FR GB IT LI**

(56) References cited:
**US-A-3 838 284**

(73) Proprietor: **Instrument AB Scanditronix**
**Box 3011**
**S-183 03 Täby (SE)**

(72) Inventor: **Brahme, Anders**
**Thaliavägen 12**
**S-161 00 Bromma (SE)**
Inventor: **Reistad, Dag**
**Skogsvägen 20**
**S-752 56 Uppsala (SE)**

(74) Representative: **Svanfeldt, Hans-Ake et al**
**DR. LUDWIG BRANN PATENTBYRA AB Box 1344**
**Drottninggatan 7**
**S-751 43 Uppsala (SE)**

Courier Press, Leamington Spa, England.

## Description

The present invention refers to a method of correcting symmetry errors in a beam of therapeutic rays by means of a transmission ion chamber. The invention also refers to a transmission ion chamber for carrying out this method.

A transmission ion chamber conventionally consists of a housing which is filled with an ionizable gas (usually air) where one or more high voltage electrodes are arranged in parallel with and spaced from one or more ion trapping electrodes. The transmission ion chamber is placed in a beam of ionizing radiation with its electrodes orientated generally at right angles to the central axis of the beam. If the high voltage electrodes are connected to a suitable voltage source and the ion trapping electrodes are connected to a suitable measuring system one may measure electric currents which pass from the ion trapping electrodes to earth. These currents are generally proportional to the mean value of the intensity of the beam which exposes the ion trapping electrodes.

By designing the ion trapping electrodes in a particular way and by arranging these ion trapping electrodes when designed in such particular way in special patterns it is also possible to use the ion currents of the electrodes for controlling symmetry of the beam. Examples thereof are known from the French patent specification 7302839 and from the U.S. patent specification 3 838 284.

The said French patent specification shows a transmission ion chamber, the principal object of which is to study the homogeneity of the beam, and for this purpose two different sets of electrodes are used both of which are entirely within the beam.

The U.S. patent specification describes a linear accelerator having a transmission ion chamber, the object of which is to measure and correct the symmetry of a beam of photons.

In radiotherapy with photons a so called equalizing filter is used to produce treatment fields with uniform dose distribution. The invention described in the U.S. patent specification utilizes properties of this equalizing filter and, therefore, can be utilized only when equalizing filters are used.

In a modern radiotherapy apparatus, along with radiation of photons, radiation of a different kind, for example electrons, is also used. When utilizing electron radiation no equalizing filter is used.

According to the U.S. patent specification the form and placing of the transmission ion chamber will be dependent on properties of the equalizing filter which may be specific to a particular filter. In a modern radiotherapy apparatus there are often several equalizing filters. The utilization of the invention described in the U.S. patent specification together with several different equalizing filters would be possible in certain cases only if the transmission ion chamber is exchanged or has its position changed and the equalizing filter is exchanged.

The present invention aims at eliminating the limitations mentioned above and refers to a method and a device for measuring and correcting the symmetry of a beam of ionizing radiation of any kind. The invention is not dependent on the presence of any equalizing filter.

The characteristic features of the invention appear from the attached claims. The basic idea of the invention is that the outer electrodes are located such that the beam steadily strikes a first part of their surface while the remaining part of their surface lies in the shadow of a primary collimator inserted in the beam. The primary collimator is a stationary, non-exchangeable structure element which is included in the radiotherapy device, for example a linear accelerator or microtron.

A preferred embodiment of the invention will be described more closely below in connection with the attached drawings, in which

Figure 1 diagrammatically shows a linear accelerator in which the transmission ion chamber according to the invention is included,

Figures 2, 3, 4 are diagrams which show various dose distributions,

Figure 5 is a plan view of the electrode configuration in the transmission ion chamber according to the invention,

Figure 6 is a cross-sectional view along the line V—V in Figure 4 and control equipment coupled thereto, and

Figure 7 is a cross-sectional view along the line VI—VI in Figure 4 and control equipment coupled thereto.

A particle accelerator 1 emits a beam 2 of charged particles to a beam transport system which includes four magnetic control elements 3, 4, 5 and 6. After possibly being subjected to a 90° deflection in a deflection magnet 7 the beam 2 strikes a target 8 which then emits a beam of therapeutic radiation, for example, photons, electrons, neutrons, protons or mesons. A primary collimator 9 confines the solid angle occupied by the beam emitted by the target 8. The primary collimator 9 is made of a material which is substantially impervious to the beam from the target 8. An equalization filter 10 may be inserted under the primary collimator to change the properties of the beam, for example the dose distribution transversely across the beam. It is to be noted that such an equalization filter 10 is not required for a correct function of the transmission ion chamber according to the invention as described hereinafter. Such a transmission chamber 11 is placed between the primary collimator 9 and the surface 12 to be irradiated. The area to be irradiated is adjusted by means of a movable collimator 13.

The transmission ion chamber 11 is used in the first place for determining the dose rate in the treatment field. The means used for this purpose are conventional and therefore will not be described more in detail.

By arranging the electrodes of the transmission ion chamber 11 in a particular way the centering and symmetry of the beam may be sensed, and the electric signals from the electrodes may be used to correct errors possibly occurring in the centering and symmetry, respectively.

The use of the invention will be illustrated by way of two examples of missaligned photon beams, where the photon beams are produced by the process of bremsstrahlung, i.e. the radiation is produced as a result of an electron ray 2 impinging the target 8.

The centering of the photon beam is dependent on the position of the electron ray 2 on the target 8. The photon beam is centered only if the electron ray strikes the target at the point which lies on the rotational symmetry axis of the primary collimator 9.

On the other hand, the photon beam is symmetric only if it is generated by an electron ray 2 which is centered on the target and also strikes the target with an angle of incidence such that the ray is parallel to the rotational symmetry axis of the primary collimator 9.

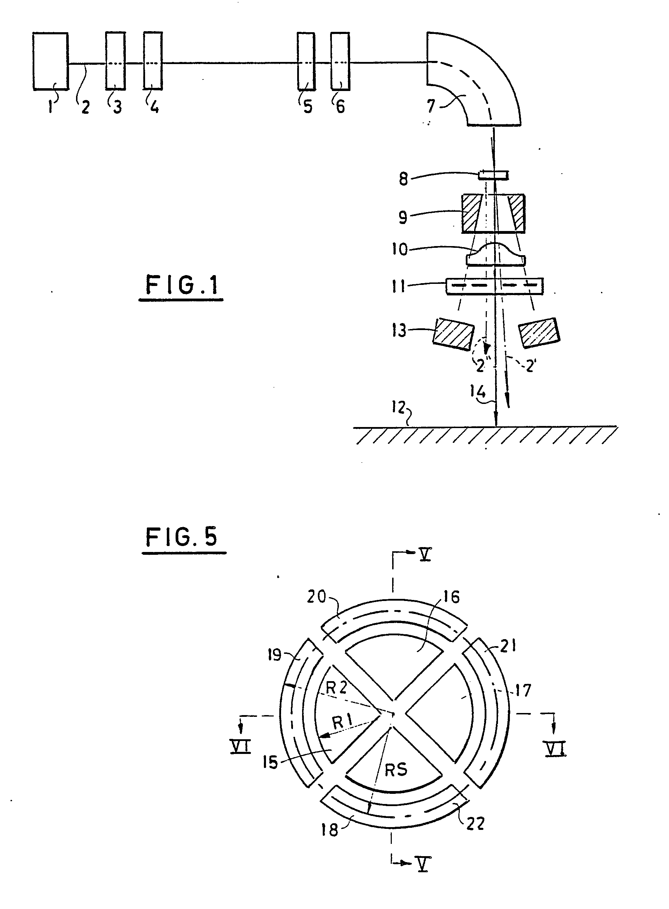

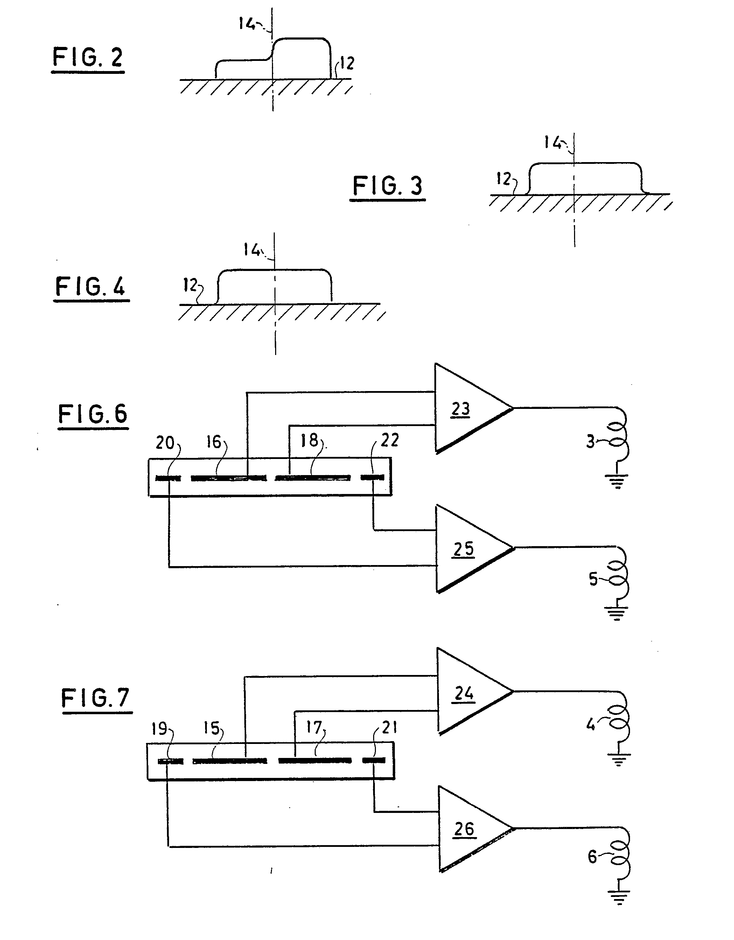

Figure 2 shows an example of a photon dose distribution transversely across the field of irradiation, a so called transverse distribution, which is generated with an electron ray which is centered on the target 8 but is striking it with an improper angle of incidence as is illustrated with line 2' in Figure 1.

Figure 3 shows an example of a transverse distribution of a photon beam which is generated with an electron ray which is not centered on the target but is striking it with a proper angle of incidence as is illustrated with the line 2'' in Figure 1.

Figure 4 shows an example of a transverse distribution corresponding to Figure 2 and obtained with a correctly centered ray having the proper angle of incidence. The effective source of radiation is here located on the rotational symmetry axis 14 of the primary collimator 9 and the central ray of the beam coincides with the axis 14.

Figure 5 shows an electrode arrangement in the transmission ion chamber according to the invention. Four flat inner electrodes 15, 16, 17, 18 are arranged in a circular area which is centered on the rotational symmetry axis 14 of the primary collimator 9. This circular area has the radius R1. Furthermore, four flat outer electrodes 19, 20, 21, 22 are arranged beyond the said circular area with the radius R1 but within another circular area which has the radius R2 and which is centered on the rotational symmetry axis 14 of the primary collimator 9. The primary collimator 9 collimates the beam so that its diameter in the plane of the transmission ion chamber has the radius RS. The radii of the electrodes 15 and 22 are chosen according to the invention so that R1 < RS < R2. Accordingly, the inner electrodes 15 to 18 will be completely exposed (i.e. will lie entirely within) by the beam while the electrodes 19 to 22 are partially shaded by the primary collimator 9 which, as mentioned above, constitutes a non-exchangeable unit of the assembly.

As will be seen from Figure 6 the electrodes 16 and 18 are connected to a differential amplifier 23 which supplies the magnetic control element 3 with a current which is proportional to the difference between the signals from the electrodes 16 and 18.

Figure 7 shows that the electrodes 15 and 17 are connected to another differential amplifier 24 which supplies the magnetic control element 4 with a current which is proportional to the difference between the signals from the electrodes 15 and 17. The magnetic control elements 3 and 4 are acting upon the ray 2 so that the angle of incidence with which said ray strikes the target will change without appreciably affecting the centering of the ray on the target.

The relative difference between the ion currents from the electrodes 19 and 21 will depend on the centering error of the ray, i.e. the offset of the effective source of radiation in relation to the rotational symmetry axis 14 of the primary collimator 9 measured along the line VI—VI (Figure 5) while the relative difference between the ion currents from the electrodes 20 and 22 will be dependent on the centering error of the effective source of radiation in relation to the rotational symmetry axis 14 of the primary collimator 9 measured along the line V—V at right angles to the line VI—VI.

To make correction for centering errors the outer electrodes 20 and 22 are connected to a differential amplifier 25 shown in Figure 6. The differential amplifier supplies the magnetic control element 5 which moves the ray 2 in a direction that tends to move the effective source of radiation in the direction of the line V—V towards the rotational symmetry axis 14 of the primary collimator 9. In a corresponding way the outer electrodes 19 and 21 are connected to a differential amplifier 26 which supplies the magnetic control element 6 with a current which moves the ray 2 in a direction that tends to move the effective source of radiation towards the rotational symmetry axis 14 of the primary collimator 9 in the direction of the line VI—VI.

In the embodiment of the invention described above the magnetic control elements 3 to 6 have been shown to be separate elements which are grouped two and two in the path along which the ray 2 is transported from the particle accelerator 1 to the target 8. According to the invention one of the magnetic control elements in one or the other or in both the groups may consist of a deflection magnet. For example, the element 6 may be omitted and replaced by a deflection magnet 7 which therefore, in addition to deflecting the ray also corrects the position thereof.

## Claims

1. A method of controlling a divergent beam of rays, said method comprising the steps of:
   a) inserting a rotationally symmetric primary collimator (9) in said beam;
   b) locating a transmission ion chamber (11) in said beam emerging from the primary collimator, said ion chamber including at least four flat inner ion trapping electrodes (15 to 18) located near the center of the ion chamber and at least four flat outer ion trapping electrodes (19 to 22) located near the periphery of the ion chamber;
   c) positioning the inner electrodes so that said beam steadily strikes the whole surface of said inner electrodes;
   d) positioning the outer electrodes so that said beam steadily strikes a first part of the surface of said outer electrodes, the remaining part of the surface of said outer electrodes lying in the shadow of the primary collimator;
   e) deriving electrical signals from said inner and outer electrodes;
   f) utilising said electric signals via control elements (3 to 6; 23 to 26) for correcting any deviation errors in the beam, i.e. any angular deviation of the beam in respect to the direction of rotational symmetry axis of the primary collimator, and for correcting any centering errors in the beam, i.e. any linear displacements of the beam in respect to said rotational symmetry axis with reference to the beam emission point (8), said step (f) being characterized by utilising the electric signals from the inner electrodes (15 to 18) for correcting said deviation errors in the beam and by utilising the electric signals from the outer electrodes (19 to 22) for correcting said centering errors in the beam.

2. A transmission ion chamber system for carrying out the method according to claim 1, a rotational symmetric primary collimator being inserted in a divergent beam of therapeutic rays and said ion chamber (11) being located in said beam between the primary collimator (9) and a surface (12) to be irradiated with said beam, said chamber including at least four flat inner ion trapping electrodes (15 to 18) located near the center of the ion chamber and at least four flat outer ion trapping electrodes (19 to 22) located near the periphery of the ion chamber, the inner electrodes being positioned so that said beam steadily strikes the whole surface of said inner electrodes and the outer electrodes being positioned so that said beam steadily strikes a first part of the surface of said outer electrodes, the remaining part of the surface of said outer electrodes lying in the shadow of the primary collimator, said inner and outer electrodes emitting electrical signals which are fed to first and second control elements (3 to 6; 23 to 26) for correcting any deviation errors in the beam, i.e.

any angular deviation of the beam in respect to the direction of the rotational symmetry axis of the primary collimator, and for correcting any centering errors in the beam, i.e. any linear displacements of the beam in respect to said rotational symmetry axis with reference to the beam emission point (8), said system being characterized by the fact that the electric signals from the inner electrodes (15 to 18) feed the first control elements (3, 4; 23, 24) which correct said deviation errors in the beam and that the electric signals from the outer electrodes (19 to 22) feed the second control elements (5, 6; 25, 26) which correct said centering errors in the beam.

## Patentansprüche

1. Verfahren zur Steuerung eines divergierenden Strahlenbündels, mit folgenden Schritten:
   a) das Einbringen eines rotationssymmetrischen Primärkollimators (9) in das genannte Strahlenbündel;
   b) die Anordnung einer Transmissionsionenkammer (11) in das aus dem Primärkollimator austretende Strahlenbündel, wobei die genannte Ionenkammer mindestens vier flache, innenliegende Ionen einfangende Elektroden (15 bis 18) nahe des Zentrums der Ionenkammer und mindestens vier flache, außenliegende Ionen einfangende Elektroden (19 bis 22) nahe des Randes der Ionenkammer aufweist;
   c) die Anordnung der innenliegenden Elektroden der Art, daß genanntes Strahlenbündel ständig die gesamte Fläche der genannten innenliegenden Elektroden trifft;
   d) die Anordnung der außenliegenden Elektroden der Art, daß genanntes Strahlenbündel ständig einen ersten Flächenabschnitt der genannten außenliegenden Elektroden trifft, wobei der verbleibende Flächenabschnitt der genannten außenliegenden Elektroden im Schatten des Primärkollimators liegt;
   e) das Ableiten elektrischer Signale von den genannten innen- und außenliegenden Elektroden;
   f) die Verwendung der genannten elektrischen Signale über Steuerelemente (3 bis 6; 23 bis 26), um Ablenkungsfehler im Strahlenbündel zu korrigieren, d.h. Winkelabweichungen des Strahlenbündels in Bezug zur Richtung der Rotationssymmetrieachse des Primärkollimators und zum Korrigieren von Zentriefehlern des Strahlenbündels, d.h. linearen Verschiebungen in Bezug zur genannten Rotationssymmetrieachse in Bezug auf dem Emissionspunkt (8) des Strahlenbündels, und der Schritt (f), gekennzeichnet ist durch die Verwendung der elektrischen Signale von den innenliegenden Elektroden (15 bis 18), um die genannten Ablenkungsfehler im Strahlenbündel zu korrigieren und durch Verwendung der elektrischen Signale von den außenliegenden Elektroden (19 bis 22), um die genannten Zentrierfehler des Strahlenbündels zu korrigieren.

2. Ein Transmissionsionenkammersystem zur Durchführung des Verfahrens gemäß Anspruch 1, wobei ein rotationssymmetrischer Primärkollimator in ein divergierendes Röntgenstrahlenbündel eingebracht ist un die genannte Ionenkammer (11) zwischen dem Primärkollimator (9) und einer zu bestrahlenden Fläche (12) untergebracht, ist, die genannte Kammer schließt mindestens vier flache, innenliegende Ionen einfangende Elektroden (15 bis 18) nahe des Zentrums der Ionenkammer und mindestens vier flache, außenliegende Ionen einfangende Elektroden (19 bis 22), nahe des randes der Ionenkammer ein, wobei die innenliegenden Elektroden so plaziert sind, daß ihre gesamte Fläche ständig com Strahlenbündel getroffen wird und die außenliegenden elektroden so plaziert sind, daß ein erster Flächenabschnitt vom Strahlenbündel ständig getroffen wird und der verbleibende Flächenabschnitt im Schatten des Primärkollimators liegt und die genannten innen- und außenliegenden Elektroden elektrische Signale aussenden, die zu ersten und zweiten Steuerelementen (3 bis 6, 23 bis 26) führen, um Ablenkungsfehler im Strahlenbündel zu korrigieren, d.h. Winkelabweichungen des Strahlenbündels in Bezug zur Richtung der Rotationssymmetrieachse des Primärkollimators und zur Korrektur von Zentrierfehlern des Strahlenbündels, d.h. Verschiebungen in Bezug zur genannten Rotationssymmetrieachse in Bezug auf den Emissionspunkt (8) des Strahlenbündels, dadurch gekennzeichnet, daß die elektrischen Signale der innenliegenden Elektroden (15 bis 18) an den ersten Steuerelementen (3, 4, 23, 24) anliegen, die die genannten Ablenkungsfehler des Strahlenbündels korrigieren und die elektrischen Signale der außenliegenden Elektroden (19 bis 22) an den zweiten Steuerelementen (5, 6, 25, 26) anliegen, die die genannten Zentrierfehler des Strahlenbündels korrigieren.

**Revendications**

1. Procédé de commande d'un faisceau divergent de rayons, ce procédé consistant à:

(a) insérer un collimateur primaire (9) à symétrie de révolution, dans le faisceau;

(b) placer une chambre de transmission ionique (11) dans le faisceau sortant du collimateur primaire, cette chambre ionique comportant au moins quatre électrodes intérieures plates (15 à 18) de piégeage d'ions, situées près du centre de la chambre ionique, et au moins quatre électrodes extérieures plates (19 à 22) de piégeage d'ions, situées prés de la périphérie de la chambre ionique;

(c) disposer les électrodes intérieures de façon à ce que le faisceau frappe en permanence la surface totale des électrodes intérieures;

(d) disposer les électrodes extérieures de façon à ce que le faisceau frappe en permanence une première partie de la surface des électrodes extérieures, la partie restante de la surface des électrodes extérieures se trouvant dans l'ombre du collimateur primaire;

(e) dériver des signaux électriques des électrodes intérieures et extérieures;

(f) utiliser ces signaux électriques, par l'intemédiaire d'éléments de commande (3 à 6; 23 à 26), pour corriger les erreurs éventuelles de déviation dans le faisceau, c'est-à-dire toute déviation angulaire du faisceau par rapport à la direction de l'axe de symétrie de révolution du collimateur primaire, et pour corriger les erreurs éventuelles de centrage dans le faisceau, c'est-à-dire tout déplacement linéaire du faisceau par rapport à l'axe de symétrie de rotation avec référence au point d'émission (8) du faisceau, l'opération (f) étant caractérisé en ce que les signaux électriques venant des électrodes intérieures (15 à 18) sont utilisés pour corriger les erreurs de déviation dans le faisceau, et en ce que les signaux électriques venant des électrodes extérieures (19 à 22) sont utilisées pour corriger les erreurs de centrage dans le faisceau.

2. Dispositif à chambre de transmission ionique pour la mise en oeuvre du procédé suivant la revendication 1, un collimateur primaire à symétrie de révolution étant inséré dans un faisceau divergent de rayons thérapeutiques et la chambre ionique (11) étant située dans ce faisceau entre le collimateur primaire (9) et une surface (12) à irradier avec le faisceau, cette chambre comportant au moins quatre électrodes intérieures plates (15 à 18) de piégeage d'ions situées près du centre de la chambre ionique et au moins quatre électrodes extérieures plates (19 à 22) de piégeage d'ions situées près de la périphérie de la chambre ionique, les électrodes intérieures étant disposées de sorte que le faisceau frappe en permanence toute la surface des électrodes intérieures et les électrodes extérieures étant disposées de sorte que le faisceau frappe en permanence une première partie de la surface des électrodes extérieures, la partie restante de la surface des électrodes extérieures se trouvant dans l'ombre du collimateur primaire, les électrodes intérieures et extérieures émettant des signaux électriques qui sont envoyés à des premiers et deuxièmes éléments de commande (3 à 6; 23 à 26) pour corriger des erreurs éventuelles de déviation dans le faisceau, c'est-à-dire toute déviation angulaire du faisceau par rapport à la direction de l'axe de symétrie de révolution du collimateur primaire, et pour corriger des erreurs éventuelles de centrage dans le faisceau, c'est-à-dire tout déplacement linéaire du faisceau par rapport à l'axe de symétrie de révolution avec référence au point d'émission (8) du faisceau, ce dispositif étant caractérisé en ce que les signaux électriques venant des électrodes intérieures (15 à 18) alimentent les premiers éléments de commande (3, 4; 23, 24) qui corrigent les erreurs de déviation dans le faisceau, et en ce que les signaux électriques venant des électrodes extérieures (19 à 22) alimentent les deuxièmes éléments de commande (5, 6; 25, 26) qui corrigent les erreurs de centrage dans le faisceau.

FIG.1

FIG.5

FIG. 2

FIG. 3

FIG. 4

FIG. 6

FIG. 7